# EUROPEAN PATENT APPLICATION

(11) **EP 2 288 006 A2**
(43) Date of publication of application: **23.02.2011**
(21) Application number: 10169342.2
(22) Date of filing: 13.07.2010
(51) Int. Cl.: H02K 21/14

(54) **A homopolar machine**

(30) Priority: 17.08.2009 GB 0914270
(71) Applicant: Rolls-Royce plc, London SW1E 6AT (GB)
(72) Inventor: Smith, Alexander, Holmfirth, West Yorkshire HD9 3UX (GB); Husband, Stephen, Derby, Derbyshire DE23 2QJ (GB)
(74) Representative: White, Kevin Andrew

(57) **Abstract**

There is disclosed a homopolar machine (1) comprising a rotor (3) and a stator (2). The rotor is arranged for rotation within the stator about a central axis (4) and comprises a pair of axially spaced-apart rotor poles (15, 16) formed of magnetic material and which are interconnected by a structure (17) comprising an axially magnetised magnet (21). The stator comprises a pair of conductor assemblies (7, 8) each of which is substantially annular in form and is provided around a respective rotor pole. The proposed arrangement provides a very simple and robust machine suitable for operation at very high speeds as a generator and which produces a purely DC output.

## Description

The present invention relates to homopolar machines, and more particularly relates to homopolar generators configured to directly produce a DC output voltage.
It has been proposed previously to use direct current (DC) networks for electrical distribution in aircraft and marine vessels. Whilst alternating current (AC) networks are still generally more common for such purposes, DC networks are perceived to offer several advantages. For example, a DC network permits a higher power rating per unit volume of cable. Additionally, it is generally simpler and easier to electrically connect a generator to a DC network.

In such DC network arrangements, the generators used are generally AC generators (permanent-magnet or wound-field synchronous devices) that are linked to the DC network via an electronic converter which transforms the AC generator output voltage to a DC rail voltage. Such electronic converters offer fully flexible control but are expensive, bulky and can compromise the reliability of the generator connection.

A more satisfactory solution would be to use a DC generator so as to remove or simplify the electronic converter between the generator and the DC network. Conventional DC generators, however, are generally provided in the form of AC machines that use either a mechanical commutator or switching electronics on the stator of the machine to convert the output of the generator to DC. This switching action is therefore simply moved from the separate electronic converter into the generator itself, and so no real advantage results from such an arrangement.

The only type of truly DC generator that requires no switching in the manner indicated above is the so-called homopolar generator. Whilst many different types of homopolar generators have been proposed previously, most are very complicated in configuration which can lead to reliability problems, particularly in the aerospace and marine sectors where the generators are required to operate at very high speeds. Also, the majority of previously proposed homopolar generators actually still produce an AC output voltage rather than a DC output voltage directly.

US Patent 3,737,696 discloses a form of homopolar machine having an AC stator winding made using conventional insulated copper wire embedded in a slotted and laminated stator structure. The machine uses a simple toroidal coil to produce a homopolar flux through two laminated stator packs. The rotor is magnetically salient and the homopolar flux modulates as the rotor rotates. The modulation of the flux induces an AC voltage in the stator winding at a frequency which is proportional to the rotor speed. The stator winding is wound such that its winding is mechanically offset across the two stator stacks to ensure that the induced voltages are additive rather than cancelling. An advantage of this type of design is that the relatively simple rotor can be made mechanically stiff and hence is suitable for high speed operation. However, this arrangement is functionally disadvantaged because it is still effectively an AC voltage generator.

US Patent 6,097,124 proposes a hybrid permanent magnet/homopolar generator which is claimed to produce AC or DC outputs. The device comprises rotor magnets which are mounted on the inside of a rotating external rotor and which produce a conventional alternating polarity magnetic field in the airgap with steel poles. An additional toroidal coil is used on a stator to produce a homopolar flux that increases or decreases the airgap field at the steel poles only. As the rotor rotates, an AC voltage is induced in the conventional AC stator winding, but the toroidal coil modifies the negative parts of the cycle only, to control the AC output. If the control of the toroidal coil is arranged to cancel the magnetic field on the steel poles, the stator winding will have a positive-only square-wave voltage induced at a frequency related to the rotor speed, producing a net average DC voltage. This device has a complicated rotor construction which is not suited to high-speed operation and the output voltage is still essentially AC varying about a DC offset.

There is therefore a need to provide a truly DC homopolar generator which is relatively simple in construction and which is thus suitable for operation at high speeds.

It is an object of the present invention to provide an improved homopolar machine, particularly one suitable for use as a generator.

According to the present invention, there is provided a homopolar machine comprising a rotor and a stator, the rotor being arranged for rotation within the stator about a central axis and comprising a pair of axially spaced-apart rotor poles formed of magnetic material and which are interconnected by a structure comprising an axially magnetised magnet, the stator comprising a pair of conductor assemblies each of which is substantially annular in form and is provided around a respective rotor pole.

The magnet is preferably a high-field magnet, and can take any convenient form. For example, in its simplest form the magnet may take the form of a permanent magnet, or could at least comprise a permanent magnet. Alternatively, or additionally, the magnet can comprise a toroidal field winding.

It is proposed that in some embodiments a superconducting magnet could be used. For example, in such an arrangement, the magnet could comprise yttrium barium copper oxide.

The magnet is preferably provided within a non-magnetic torque tube, the torque tube interconnecting the rotor poles.

Preferably, the rotor poles are each substantially cylindrical in form.

The rotor poles are preferably formed of steel, and can either be substantially solid, or can have a laminated construction.

The conductor assemblies may be axially spaced-apart from one another.

In a preferred arrangement, each conductor assembly comprises an annulus of electrically conductive material, each said annulus having a respective pair of axially spaced-apart electrical connections or terminals across which a DC voltage is produced during operation of the generator.

Conveniently, the electrical connections or terminals of one said annulus are angularly offset relative to those of the other annulus with respect to said axis.

Each said annulus may be provided with at least one axially oriented slot.

In a preferred arrangement, each conductor assembly comprises a plurality of said annuli arranged concentrically.

In such an arrangement, it is preferably for each conductor assembly to be configured such that the pairs of connections or terminals of each of its annuli are angularly offset from one another with respect to said axis.

Each said annulus is preferably formed of substantially solid copper. However other electrically conductive materials may be used instead of copper, for example Aluminium.

In a preferred embodiment of the present invention, a homopolar machine of the type indicated above is provided for use as a generator via forced rotation of said rotor. In such an arrangement, for example, the rotor may be driven at high speed by a prime mover such as a gas turbine engine, a diesel engine or the like.

However, it is to be appreciated that in another embodiment of the invention, the homopolar machine can instead be provided for operation as an electric a motor via the application of a DC input voltage across said conductor assemblies.

So that the invention may be more readily understood, and so that further features thereof may be appreciated, embodiments of the invention will now be described by way of example with reference to the accompanying drawings in which:
Figure 1 is a longitudinal cross-sectional view showing the general arrangement of a homopolar generator in accordance with the present invention;
Figure 2 is a transverse cross-sectional view, taken along section line I-I in figure 1, through part of the rotor of the generator;
Figure 3 is an end view showing the rotor and the static components of the generator;
Figure 4 is a view corresponding generally to that of figure 3, but which illustrates an embodiment having a modified stator winding arrangement;
Figure 5 is a schematic transverse cross-sectional view through a generator in accordance with another embodiment, in the region of one of the rotor poles;
Figure 6 is a schematic cross-sectional view similar to that of figure 5, but taken through the generator in the region of the other rotor pole;
Figure 7 is a view similar to that of figure 1, but showing an alternative embodiment; and
Figure 8 is a view similar to that of figure 7, showing another alternative embodiment.

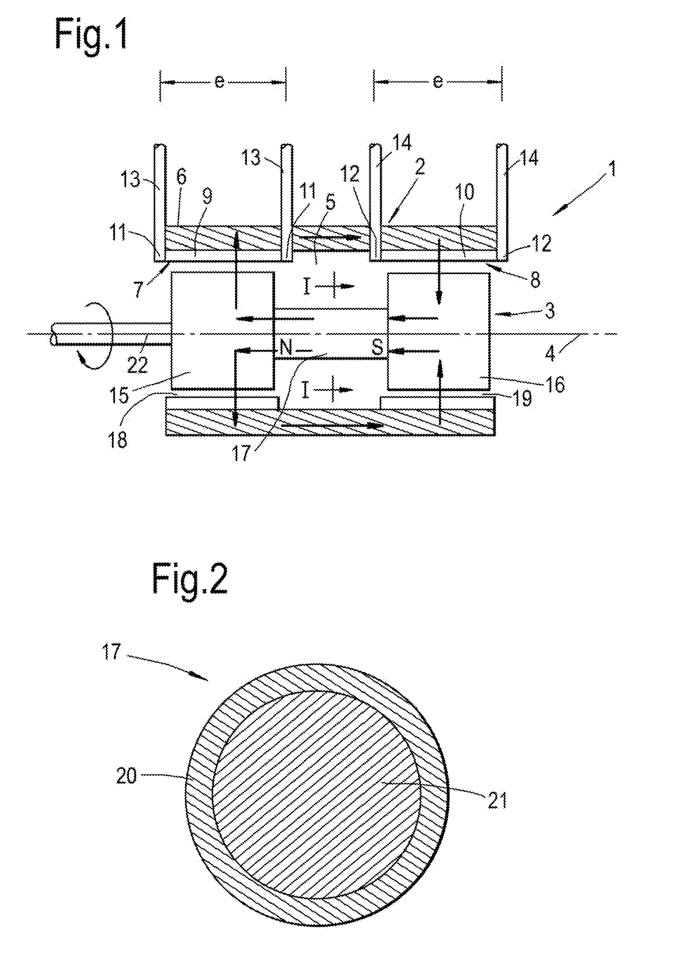

Referring now in more detail to figure 1, there is illustrated a simple homopolar generator 1 in accordance with the present invention. The generator 1 comprises a stator 2, within which is mounted a rotor 3. The stator 2 is generally cylindrical in form, being centred on a longitudinal axis 4, and defines a central space 5 within which the rotor is mounted for rotation relative to the stator about the axis 4.

The stator 2 comprises a cylindrical housing 6 which is configured to serve as stator back-iron and which is formed from magnetically conductive steel, having a laminated construction. The back-iron is constructed and dimensioned so as to minimise magnetic saturation. The stator 2 further comprises a pair of axially spaced-apart conductor assemblies 7, 8, provided at each end of the stator, each of which serves as a stator winding. In the simplified exemplary arrangement illustrated in figure 1, each conductor assembly 7,8 is provided in the form of a single respective annular drum 9, 10 mounted to the inside of the housing 6 but electrically insulated from the back-iron. The two drums 9, 10 are preferably each formed of substantially solid copper, although other electrically conductive materials could be used instead of copper; for example aluminium. Each drum 9, 10 has a pair of axially spaced-apart electrical connections or terminals 11, 12 to which are connected respective conductor leads 13, 14. The conductor leads 13, 14 are arranged so as to pass through respective holes formed through the back-iron 6 in a generally radially directed manner, for electrical connection to appropriate circuitry remote from the components illustrated in figure 1.

The rotor 3 comprises a pair of axially spaced-apart rotor poles 15, 16 which are interconnected by a connecting structure 17. The poles 15, 16 are each formed of magnetic material such as a convenient steel alloy, and may be either solid or laminated in construction. Each rotor pole 15, 16 is aligned with a respective conductor assembly 7, 8 and is configured so as to have an axial length substantially equal to or slightly less than the axial length of the conductor assembly 7, 8. In the particular arrangement illustrated in figure 1, it will be noted that the rotor poles 15, 16 are each located generally between the spaced-apart conductor leads 13, 14 of the respective assemblies. Also, each rotor pole 15, 16 has an outer diameter slightly less than the inner diameter of the associated conductor assembly 7, 8, so as to define a small air-gap 18, 19 between the rotor pole and the conductor assembly. In practice, it envisaged that the air-gaps 18, 19 will be as small as practicable; for example 1mm or less.

The connecting structure 17, illustrated in transverse cross-section in figure 2, comprises a non-magnetic torque tube 20 of cylindrical form, within which is fixedly mounted an axially magnetised high-field magnet 21. The torque tube is fixedly connected at each end to a respective rotor pole 15, 16, and is co-axial with the two rotor poles. In a simple embodiment of the invention, the torque tube may be formed of stainless steel alloy, and the magnet 21 may be a permanent magnet.

The rotor 3 is fixedly connected to a co-axial drive shaft 22 which may be operatively connected to a suitable prime mover, such as a gas turbine engine, a diesel engine or the like, in order to rotate the rotor 3 during operation of the generator. As will thus be appreciated, the shaft will be rotated at very high speed, particularly in the case that it is driven by a gas turbine engine, thereby rotating the rotor 3 also at very high speed. The drive shaft 22 is formed of substantially non-magnetic material, such as a suitable stainless steel alloy, in order to prevent the passage along the shaft of magnet flux from the magnet.

As will be appreciated, the axially magnetised magnet 21 provided between the two rotor poles 15, 16 has the effect of producing a North pole (N) on one rotor pole (the left-hand pole 15 shown in figure 1), and a South pole (S) on the other pole (the right-hand pole 16 shown in figure 1). A unidirectional magnetic field is thus produced and which is shown schematically in figure 1 by the arrows which represent the flux path. As will be appreciated by those of skill in the art, the rotor poles 15, 16 thus each see a stationary magnetic field pattern, and so may be constructed from solid magnetic steel in order to provide high mechanical integrity at high rotational speeds.

As will be appreciated by those of skill in the art, rotation of the rotor 3 is effective to rotate the magnetic field produced by the magnet relative to the static conductor assemblies 7, 8. An electrical potential e is this generated between the axially spaced terminals of each static conductor assembly, and thus between the conductor leads 13, 14 of the two assemblies. The provision of two axially-spaced apart conductor assemblies 7, 8 ensures that the two voltages e induced in the stator 2 are additive.

The above-described generator has a very simple and robust construction and so is well suited for operation at very high rotational speeds, for example via connection to a gas turbine engine. The generator is magnetically symmetrical in the circumferential direction and so the homopolar magnetic field produced by the rotor 3 induces a purely DC voltage across the stator connections 13, 14, having a magnitude which is proportional to the rotational speed of the rotor 3.

The very simple construction of the stator winding, as represented by the two copper drums 9, 10 is designed for low voltage, high current DC operation. This configuration also makes it suitable for in-situ magnetisation of the rotor magnet 21 by applying a high current electrical pulse across each pair of stator connections 11, 12. In-situ magnetisation of the magnet in such a manner helps to further simplify manufacture of the rotor 3.

It is to be appreciated that in the simple form described above, the DC output voltage of the generator 1 will vary in direct proportion to the rotational speed of the drive shaft 22 and the rotor 3. In practical installations where the rotor is driven by a gas turbine engine which operates at a range of engine speeds (for example during the operating cycle of a typical aircraft flight), it is therefore necessary to use an external converter arrangement in order to connect the generator to a fixed DC electrical bus arrangement. Nevertheless, the converter can take a relatively simple form as it will not be required to convert an AC output to a DC as in the case of many prior art generators.

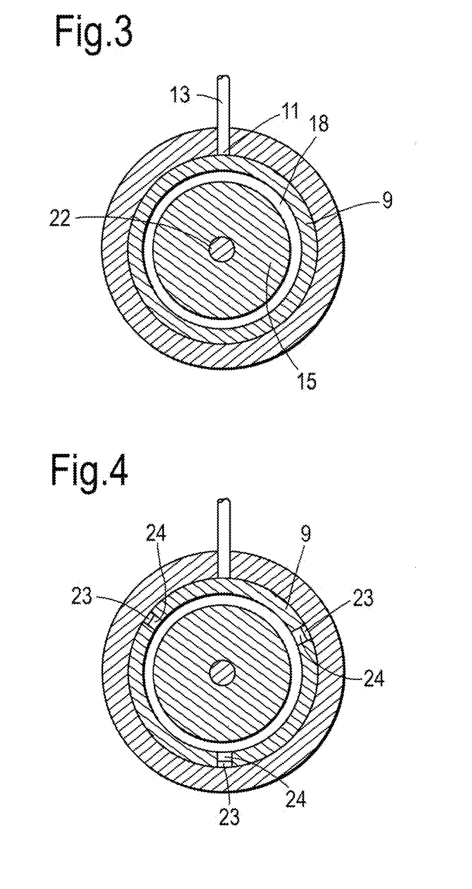

Turning now to consider figure 4, there is shown an end view of an alternative embodiment of generator which can be considered to represent a modification of the one described above and shown in figures 1 to 3. In the arrangement shown in figure 4, the two annular copper drums 9, 10 of the conductor assemblies 7, 8 are each provided with a number of axially-oriented longitudinal channels in the form of slits 23. The slits 23 of the arrangement illustrated in figure 4 are substantially equi-spaced around the drum, and allow for convenient anchoring of the drum to the stator housing 6, for example via non-magnetic pins 24 which extend radially inwardly from the stator housing and which are received and locate within the slits 23.

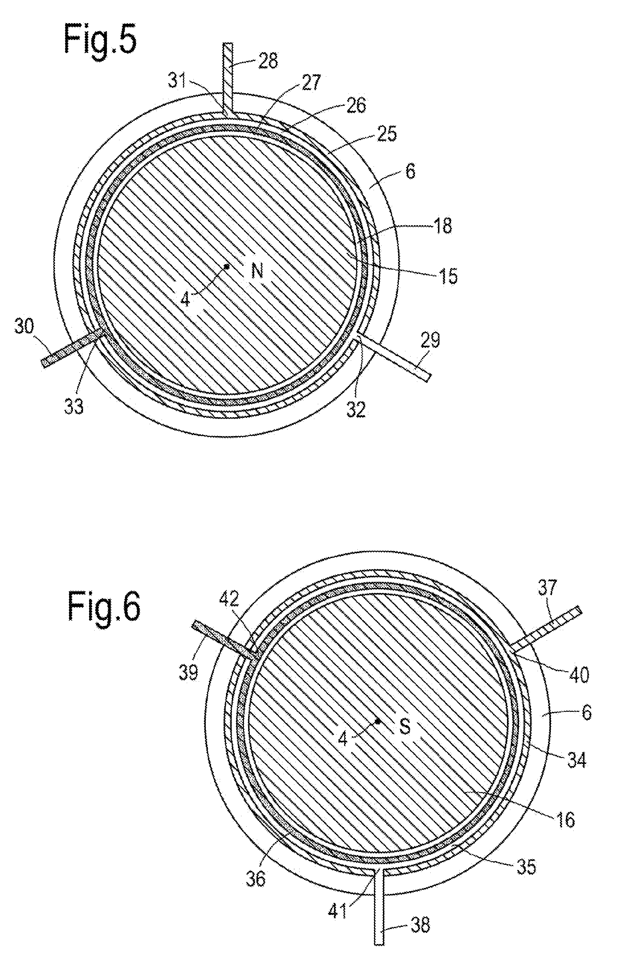

It is also to be appreciated that whilst each conductor assembly 7, 8 of the arrangements illustrated in figures 1 to 4 comprises only a single annular copper drum 9, 10, variants of the invention are envisaged in which each conductor assembly comprises a plurality of concentric annular drums. Figures 5 and 6 illustrate such an arrangement, in which identical or equivalent components are identified with the same reference numerals.

Figure 5 shows a schematic cross-sectional view taken through the region of the generator containing the North rotor pole 15. In this arrangement, the conductor assembly 7 associated with the North pole 15 is made up of three concentric copper drums 25, 26, 27. The outer drum 25 having the largest diameter is mounted inside the back-iron housing 6 in a similar manner to the arrangements described above. The middle drum 26 is mounted inside the outer drum so as to be closely adjacent the outer drum but electrically isolated from it. Similarly, the inner drum 27 having the smallest diameter is mounted inside the middle drum 26 so as to be closely adjacent the middle drum but electrically isolated from it. The rotor pole N rotates within the inner drum 27 and is spaced therefrom by the small air-gap 18.

Each of the three concentric drums 25, 27, 27 is provided with its own pair of axially spaced-apart conductor leads 28, 29, 30 respectively (only one of each pair being shown in figure 5). The respective pairs of conductor leads 28, 29, 30 are connected in series outside the housing the housing 6 (not shown). As will be appreciated, a DC output voltage will be induced across each of the three copper drums 25, 26, 27 during operation of the generator, and so the series connection of the three drums in this manner provides a higher total output voltage when compared to the single-drum design of figures 1 to 4.

As will also be noted from figure 5, the respective pairs of conductor leads 28, 29, 30 of each drum 25, 26, 27 extend radially outwardly from connections or terminals 31, 32, 33 on the respective drum, with the connections or terminals 31, 32, 33 being angularly offset from one another with respect to the rotational axis of the generator. More particularly, it will be noted that the connections or terminals of the three drums are substantially equi-angularly offset such that: the connections or terminals 32 of the middle drum 26 are angularly offset by 120° relative to those (31) of the outer drum 25; the connections or terminals 33 of the inner drum 27 are similarly angularly offset by 120° relative to those (32) of the middle drum; and the connections or terminals 31 of the outer drum are angularly offset by 120° relative to those (33) of the inner drum 27. Such an arrangement can help to mitigate possible disadvantageous effects of so-called "torque-pulsation". As will be clear to those of the skill in the art, by angularly spacing the three pairs of conductor leads 28, 29, 30 in the manner illustrated in schematically in figure 5, a more balanced rotor performance can be achieved.

Figure 6 is generally similar to figure 5, but shows a schematic cross-sectional view taken through the region of the generator containing the South rotor pole 16. Again, three copper drums 34, 35, 36 are arranged concentrically in an identical manner to that shown in figure 5. Each drum has a respective pair of conductor leads 37, 38, 39 extending radially outwardly from respective connections or terminals 40, 41, 42 on the drums. The connections or terminals 40, 41, 42 of the three drums are substantially equi-angularly offset in a similar manner to that indicated above and shown in figure 5. Additionally, it will be noted that the connections or terminals 40, 41, 42 of the conductor assembly provided around the South rotor pole 16 are angularly interdigitated between those of the conductor assembly around the N rotor pole 15. This interdigitated relationship helps to further balance the rotor and reduce the effect of torque pulsation.

Although the invention has been described above with particular reference to the use of a permanent magnet 21 between the two rotor poles 15, 16, other forms of magnet are also envisaged. For example, it is envisaged that the permanent magnet 21 could be replaced by a generally conventional toroidal field winding (not shown), which would provide the potential to increase the intensity of the rotor magnetic field. Such an arrangement would also permit the intensity of the rotor magnetic field to be varied, for example in dependence on the rotational field of the rotor, which would thus provide the ability to actively control the output DC voltage of the generator. Such an arrangement could thus operate without the need for an external controller in order to account for changes in the rotational speed of the rotor. Of course, such an arrangement would require the provision of an effective electrical connection between the stator and the rotating field winding which is likely to lead to a somewhat less robust rotor construction than that of the previously described embodiments.

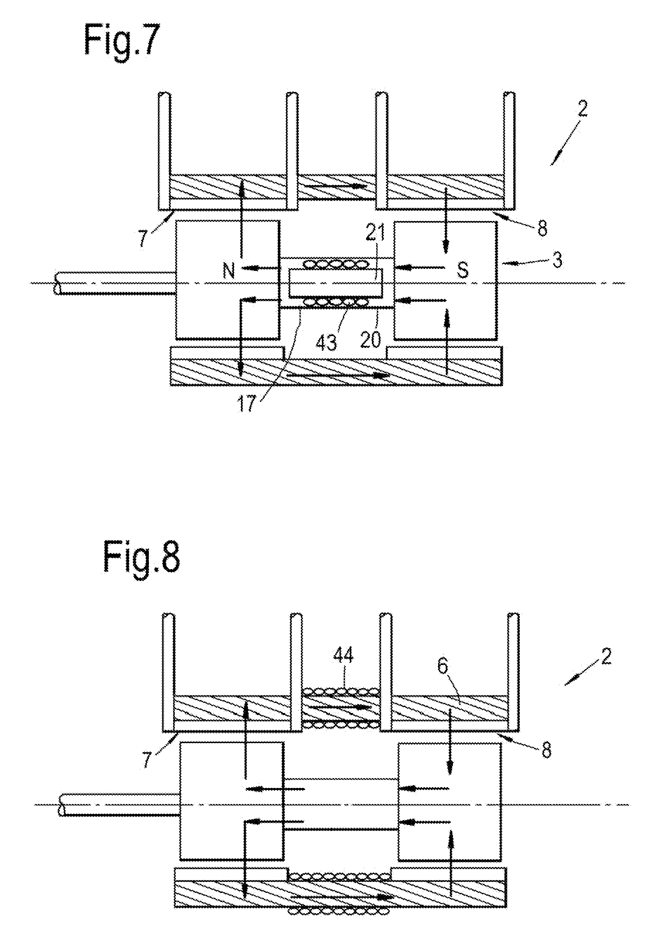

Figure 7 illustrates another possible type of rotor construction, in which the permanent magnet 21 is supplemented with (rather than replaced by) a toroidal control winding provided around the magnet, between the magnet and the torque tube 20. An arrangement of this type would offer benefits over the arrangement described above in which the rotor magnetic field is provided solely by a toroidal winding, because this arrangement would permit a reduction in the power requirement of the toroidal winding 43, whilst still permitting a degree of control of the output DC voltage. This arrangement would this require the transmission of less electrical power to the rotor, thereby simplifying the electrical connection to the rotor and hence improving the overall robustness of the rotor.

It is even envisaged that variants of the invention could use a superconducting magnet within the connecting structure 17 of the rotor, in place of the permanent magnet 21 of the illustrated embodiments. For example, it is envisaged that such a superconducting magnet could be formed from yttrium barium copper oxide. An advantage with such an arrangement would be a significant increase in the rotor field level and the power density of the generator. However, such an arrangement would be complicated by the need to cool the superconducting material, for example via the supply of cooling liquid nitrogen to the rotor, which could reduce the robustness of the rotor construction and hence its maximum operating speed.

Figure 8 schematically illustrates another possible arrangement according to the present invention. In this arrangement, the stator 2 includes an auxiliary field coil 44 which is wound around the stator back-iron 6 at a position between the axially spaced apart conductor assemblies 7, 8. It is envisaged that energisation of the auxiliary field coil 44 could be controlled in a manner effective either to oppose and/or supplement the magnetic flux arising from the magnet 21 of the rotor 3, thus providing an alternative means of output voltage regulation. The auxiliary field coil 44 could be provided either instead of, or in addition to, the rotor winding 43 shown in figure 7.

Whilst the invention has been described above with specific reference to the homopolar machine being configured for operation as a generator via forced rotation of the shaft, it is to be appreciated that a homopolar machine in accordance with this invention could alternatively be operated as an electric motor, via the application of a DC input voltage across the conductor assemblies 7,8.

When used in this specification and claims, the terms "comprises" and "comprising" and variations thereof mean that the specified features, steps or components are included. The terms are not to be interpreted to exclude the presence of other features, steps or components.
The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A homopolar machine (1) comprising a rotor (3) and a stator (2), the rotor (3) being arranged for rotation within the stator (2) about a central axis (4) and comprising a pair of axially spaced-apart rotor poles (15, 16) formed of magnetic material and which are interconnected by a structure (17) comprising an axially magnetised magnet, the stator (2) comprising a pair of conductor assemblies (7, 8) each of which is substantially annular in form and is provided around a respective rotor pole (15, 16), wherein each conductor assembly comprises an annulus of electrically conductive material, each said annulus having a respective pair of axially spaced-apart electrical connections or terminals across which a DC voltage is produced during operation of the generator.

2. A homopolar machine according to claim 1, wherein the magnet is a high-field magnet.

3. A homopolar machine according to claim 1 or claim 2, wherein the magnet comprises a permanent magnet.

4. A homopolar machine according to any preceding claim, wherein the magnet comprises a toroidal field winding.

5. A homopolar machine according to claim 1 or claim 2, wherein the magnet is a superconducting magnet.

6. A homopolar machine according to any preceding claim, wherein the magnet is provided within a non-magnetic torque tube, the torque tube interconnecting the rotor poles.

7. A homopolar machine according to any preceding claim, wherein the rotor poles are formed of steel.

8. A homopolar machine according to any preceding claim, wherein the rotor poles have a laminated construction.

9. A homopolar machine according to any preceding claim, wherein said conductor assemblies are axially spaced-apart from one another.

10. A homopolar machine according to any one of claims 1-9, wherein the electrical connections or terminals of one said annulus are angularly offset relative to those of the other annulus with respect to said axis.

11. A homopolar machine according to any one of claims 1-10, wherein each said annulus has at least one axially oriented slot.

12. A homopolar machine according to any one of claims 1-12, wherein each conductor assembly comprises a plurality of said annuli arranged concentrically.

13. A homopolar machine according to claim 12, wherein each conductor assembly is configured such that the pairs of connections or terminals of each of its annuli are angularly offset from one another with respect to said axis.

14. A homopolar machine according to any preceding claim being configured for use as a generator via forced rotation of said rotor.

15. A homopolar machine according to any one of claims 1 to 14 configured for use as a motor via the application of a DC input voltage across said conductor assemblies.
